# EUROPÄISCHE PATENTSCHRIFT

(11) **EP 1 533 073 B1**
(45) Veröffentlichungstag und Bekanntmachung des Hinweises auf die Patenterteilung: **19.07.2006**
(21) Anmeldenummer: 03405810.7
(22) Anmeldetag: 13.11.2003
(51) Int. Cl.: B23Q 11/08, B65G 1/02

(54) **Vorrichtung mit einer durch ein flexibles Element geschützten linearen Bewegungsbahn**
Device with a linear guide rail protected with a flexible element
Appareil comportant un rail de guidage linéaire protegé par un élément flexible

(43) Veröffentlichungstag der Anmeldung: 25.05.2005
(73) Patentinhaber: Marchand, Claude, 4434 Hölstein (CH)
(72) Erfinder: Marchand, Claude, 4434 Hölstein (AT); Fehr, Christian, 4125 Riehen (AT)
(74) Vertreter: Heubeck, Bernhard

(56) Entgegenhaltungen:
- EP-A- 0 407 599
- DE-A- 10 131 713
- US-A- 3 788 377
- US-A- 4 886 375
- US-A- 5 125 240
- US-B1- 6 241 230
- US-B1- 6 296 413

## Beschreibung

Vorrichtung zum Bewegen von mindestens einer Einheit entlang mindestens einer Bewegungsbahn.

Die Erfindung betrifft eine Vorrichtung zum Bewegen von mindestens einer Einheit entlang mindestens einer Bewegungsbahn gemäss dem Oberbegriff des Anspruches 1

Eine derartige Vorrichtung wird z.B. bei Laboreinrichtungen verwendet.

Der Nachteil einer derartigen Vorrichtung ist darin zu sehen, dass wegen der Öffnung im Gehäuse sowohl die Führungsschiene als auch die für den Betrieb des Gerätes erforderlichen Verbindungsleitungen offenliegen. Dadurch kann der Innenraum der Vorrichtung verschmutzen oder durch kleinere Gegenstände blockiert werden.

Die US 6,296,413 beschreibt eine Abdeckung für eine Lagerschiene auf welcher ein Schlitten hin und her bewegbar angeordnet list. Die Abdeckung besteht aus zwei Faltenbalgen die an den Enden mittels Haltern an der Lagerschiene und am Schlitten gehalten sind. Die Faltenbalgen werden bei der Verschiebung des Schlittens einerseits zusammengeschoben und andererseits auseinandergezogen.

Diese Abdeckung hat die Nachteile, dass bei der Verschiebung der Faltenbalgen einer Beanspruchung ausgesetzt ist und dass zur Verschiebung eine nicht zu vernachlässigen Kraft erforderlich ist.

Der Erfindung liegt die Aufgabe zugrunde, die erwähnten Nachteile zu eliminieren.

Diese Aufgabe wird erfindungsgemäss mit den Merkmalen des unabhängigen Anspruches gelöst. Weiterbildungen der Erfindung ergeben sich aus den abhängigen Ansprüchen.

Der Erfindung liegt der Gedanke zugrunde durch Abdecken der Bewegungsbahn einer bewegten Einheit eine Verschmutzung des die Bewegungsbahn umgebenden Innenraumes eines Gehäuses auszuschliessen. Erfindungsgemäss sind hierzu ein flexibles Element, welches in den Endbereichen der Bewegungsbahn am Gehäuse festgelegt ist und die Einheit teilweise so umgibt, dass die Einheit durch die Öffnung zugänglich ist, und Führungsorgane für das flexible Element vorgesehen, die drehbar an der Einheit angeordnet sind.

Der Vorteil der Erfindung wird darin gesehen, dass die Einheit entlang der Führungsschiene als auch entlang dem Element bewegt wird, so dass der Innenraum des Gehäuses gegen Umgebung immer abschlossen ist.

Die Erfindung ist ferner in vorteilhafter Weise in verschiedenen technischen Gebieten anwendbar, z.B. bei Laborsystemen, Robotern oder dgl.

Bei einer Ausführungsform kann eine lineare Bewegungsbahn vorgesehen sein. Der damit erzielbare Vorteil ist im einfachen Aufbau der Vorrichtung zu sehen.

Es ist von Vorteil, wenn das flexible Element bandförmig ist.

Bei einer anderen Ausführungsform kann ein elastisches Mittel zur Straffhaltung des Elements vorgesehen sein. Dadurch wird in vorteilhafter Weise die Bewegung der Einheit entlang des flexiblen Elementes erleichtert und folglich verbessert.

Es ist von Vorteil, wenn die Einheit mindestens eine Antriebseinheit aufweist.

Bei einer Ausführungsform kann die Einheit zwei Antriebseinheiten aufweisen. Der Vorteil ist darin zu sehen, dass zwei der Anwendung entsprechende Einrichtungen voneinander unabhängige betätigt werden können.

Bei einer weiteren Ausführungsform können zwei Einheiten vorgesehen sein, die unabhängig voneinander entlang der Bewegungsbahn bewegbar angeordnet sind. Dadurch kann der Anwendungsbereich der Vorrichtung in vorteilhafter Weise erweitert werden.

Es ist von Vorteil, wenn ein Tragelement für die Einheit im Gehäuse angeordnet ist.

Bei einer weiteren Ausführungsform kann das Tragelement aus Teilelementen bestehen, die durch eine Stossverbindung miteinander verbunden sind. Dadurch wird in vorteilhafter Weise ein Baukastensystem geschaffen, welches eine Anpassung der Länge der Bewegungsbahn auf die Anwendung ermöglicht und kostengünstig ist.

Es ist von Vorteil, wenn das Tragelement ein Rohr ist.

Bei einer Ausführungsform können zur Verbindung der Teilelemente, ein Verbindungsteil, der mit den Teilelementen in Eingriff ist, und Schrauben vorgesehen sein und die ersten Teilelemente können eine Mehrzahl von Gewindebohrungen und der Verbindungsteil kann eine Mehrzahl von Durchgangsbohrungen aufweisen, die bezüglich der Stossfläche versetzt angeordnet sind.

Weiter ist es von Vorteil, wenn der Verbindungsteil hülsenförmig ausgebildet ist.

Bei einer anderen Ausführungsform sind zur Verbindung der Teilrohre ein Verbindungsteil mit einem Bund und zwei Ansätzen, die in Ausdrehungen der Teilrohre angeordnet sind und Stiftschrauben vorgesehen und die Teilrohre können eine Mehrzahl von Gewindebohrungen und die Verbindungsteil können Mehrzahl von Durchgangsbohrungen aufweisen, die bezüglich der Stosskante versetzt angeordnet sind. Der Vorteil dieser Verbindung ist in ihrer Einfachheit und den geringen Herstellungskosten zu sehen.

Es ist von Vorteil, wenn der Innendurchmesser der Ausdrehungen und der Aussendurchmesser der Ansätze mit einer Passung gefertigt ist.

Die Durchgangsbohrungen können eine konische Ansenkung und die Stiftschrauben einen konischen Ansatz aufweisen, der mit der Ansenkung in Wirkeingriff ist, so dass die Teilrohre unter Druck an den Bund anliegen. Dadurch wird in vorteilhafter Weise eine Stossverbindung mit hoher Biegesteifigkeit und Festigkeit erzielt.

Nachfolgend wird die Erfindung anhand der beiliegenden Zeichnungen erläutert.

Es zeigen:
- Fig.1: eine Frontansicht einer ersten Ausführung der Vorrichtung,
- Fig.2: einen Schnitt entlang der Linie II-II in der Ausführung nach Fig.1,
- Fig.2A: einen Schnitt entlang der Linie II-II bei einer zweiten Ausführung,
- Fig.3: einen Schnitt entlang der Linie III-III in Fig.1,
- Fig.4: einen Schnitt entlang der Linie III-III bei einer modifizierten Ausführung der Vorrichtung,
- Fig.5: eine Ausführung eines Tragelementes im Schnitt,
- Fig.6: eine andere Ausführung eines Tragelementes im Schnitt und
- Fig.7: eine weitere Ausführung eines Tragelementes im Schnitt.

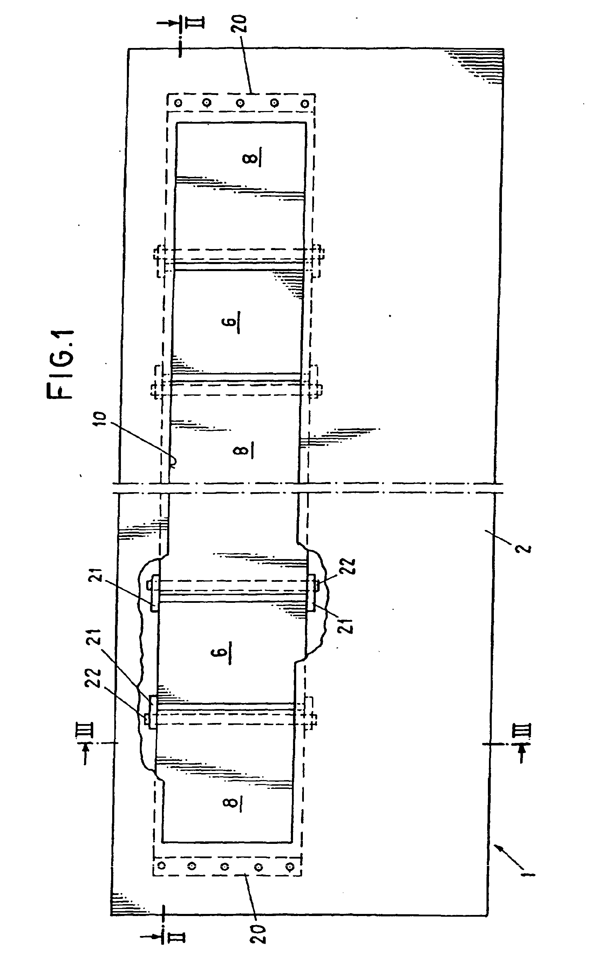

Es wird auf die Figuren 1 bis 3 Bezug genommen. Die Vorrichtung enthält ein kastenförmiges Gehäuse 1 mit zwei Seitenwänden 2 und 3, ein Tragrohr 4, eine Führungsschiene 5, zwei Einheiten 6, zwei Antriebsvorrichtungen 7, ein flexibles Band 8 zum Abdecken der Bewegungsbahn und Führungsanordnungen 9 für das Band.

Das Gehäuse 1 enthält eine parallel zur Bewegungsbahn verlaufende Öffnung 10 in einer Seitenwand 2. Das Tragrohr 4 ist an Haltern 11 befestigt, die im Endbereich des Gehäuses 1 angeordnet sind. Die Führungsschiene 5 ist auf dem Tragrohr 4 montiert.

In jeder Einheit 6 sind zwei Antriebseinheiten 12 so angeordnet, dass deren Antriebswellen 13 entgegengesetzt gerichtet sind. Die Einheiten 6 sind mit einem Schlitten 14 versehen, die mit der Führungsschiene 5 in Eingriff sind, derart, dass die Einheiten 6 jeweils unabhängig voneinander auf der Führungsschiene 5 hin und her bewegbar sind.

Die Antriebsvorrichtungen 7 sind jeweils einer Einheit 6 zugeordnet und an den Haltern 11 montiert. Die Antriebsvorrichtung 7 enthält einen Antriebsmotor 15 mit einem Antriebsrad 16, ein Riemenrad 17 und einen Antriebsriemen 18, der mittels einer Klemme 19 jeweils mit einer Einheit 6 verbunden ist.

Das flexible Band 8 ist in den Endbereichen der Bewegungsbahn an der Innenseite des Gehäuses 1 befestigt. Zur Befestigung des Bandes 8 können elastische Elemente 20 verwendet werden, um das Band straff zu halten. Das Band kann aus Kunststoff, beschichten Gewebe, Metall oder dgl. bestehen.

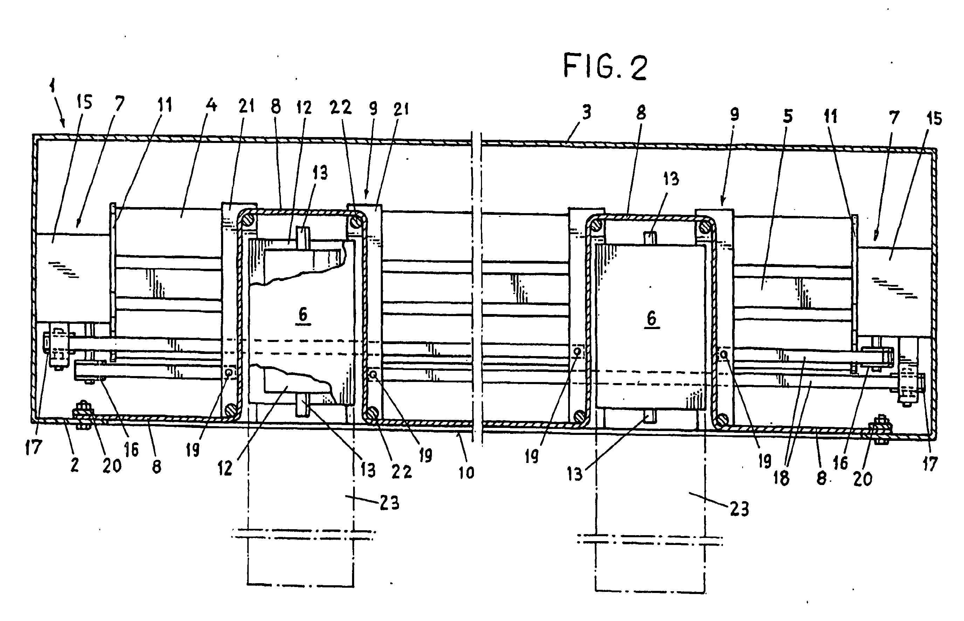

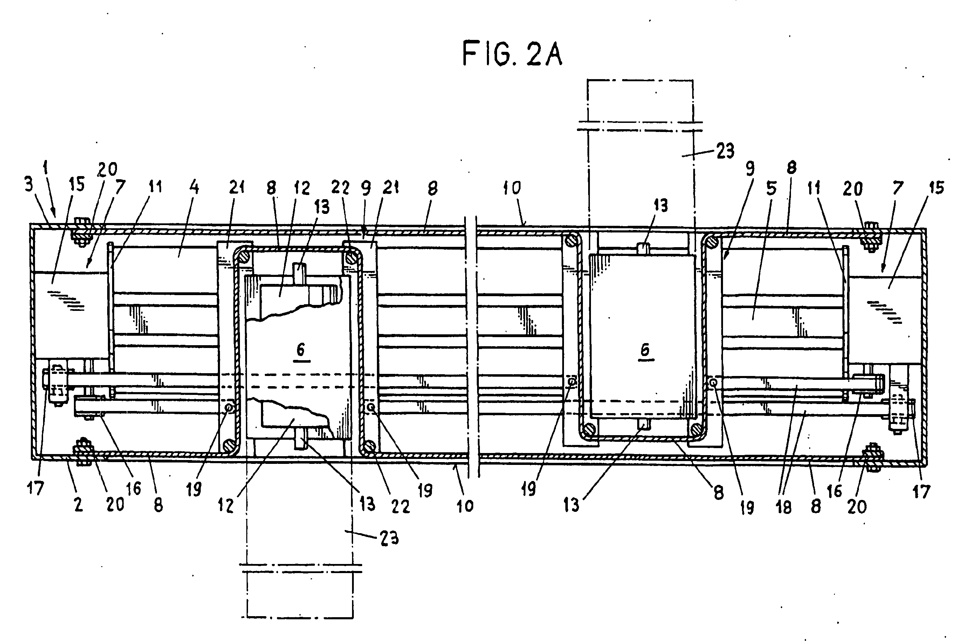

Die Führungsanordnungen 9 sind parallel zueinander an der Einheit 6 angeordnet. Die Führungsanordnung 9 besteht aus zwei Haltern 21 mit je zwei zylindrischen Stäben 22, die in den Haltern drehbar angeordnet sind. Die Stäbe 22 können in Lagern angeordnet sein, um die Reibung in vorteilhafter Weise zu verringern. Wie die Figur 2 zeigt sind die Einheiten 6 vom Band 8 an drei angrenzenden Seiten so umschlossen, dass die Einheit 6 durch die Öffnung 10 frei zugänglich ist.

Jede Einheit 6 kann mit mindestens einer der Anwendung entsprechenden Einrichtung 23 versehen werden. Zur Betätigung ist die Einrichtung 23 mit der zugewandten Antriebseinheit12 verbunden.

Die in der Fig.2A gezeigte Vorrichtung unterscheidet sich von der Vorrichtung nach Fig.1 bis 3 dadurch, dass in den Seitenwänden 2 und 3 jeweils eine Öffnung 10 ausgebildet ist, und dass zwei Bänder 8 zum Abdecken der Bewegungsbahn vorgesehen sind.

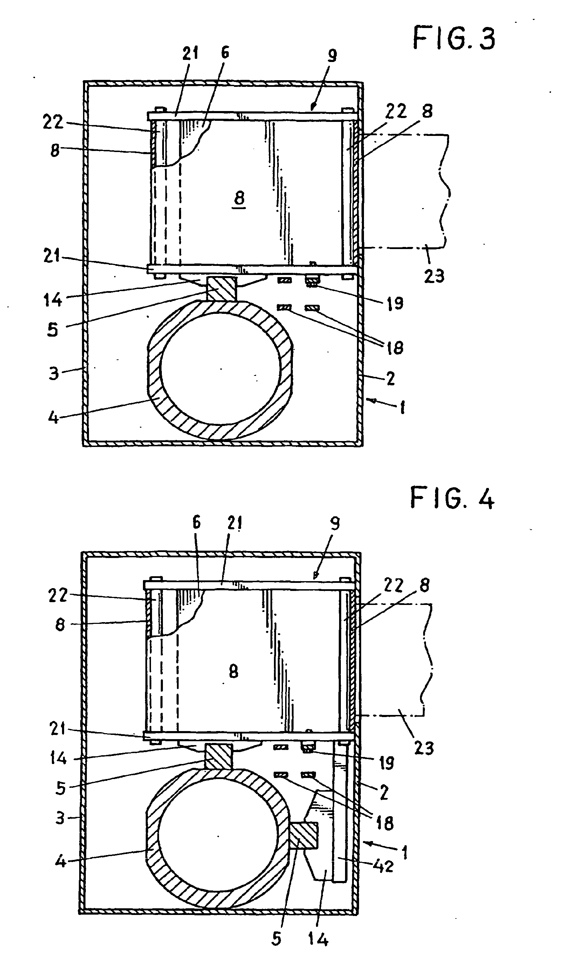

Bei der Ausführung nach Fig.4 ist eine weitere Führungsschiene 5 vorgesehen, die im Winkel von 90° bezüglich der anderen Führungsschiene 5 versetzt am Tragrohr 4 angeordnet ist. Der mit der Führungsschiene 5 in Eingriff stehende Schlitten 14 ist mittels eines Halters 42 an der Einheit 6 befestigt.

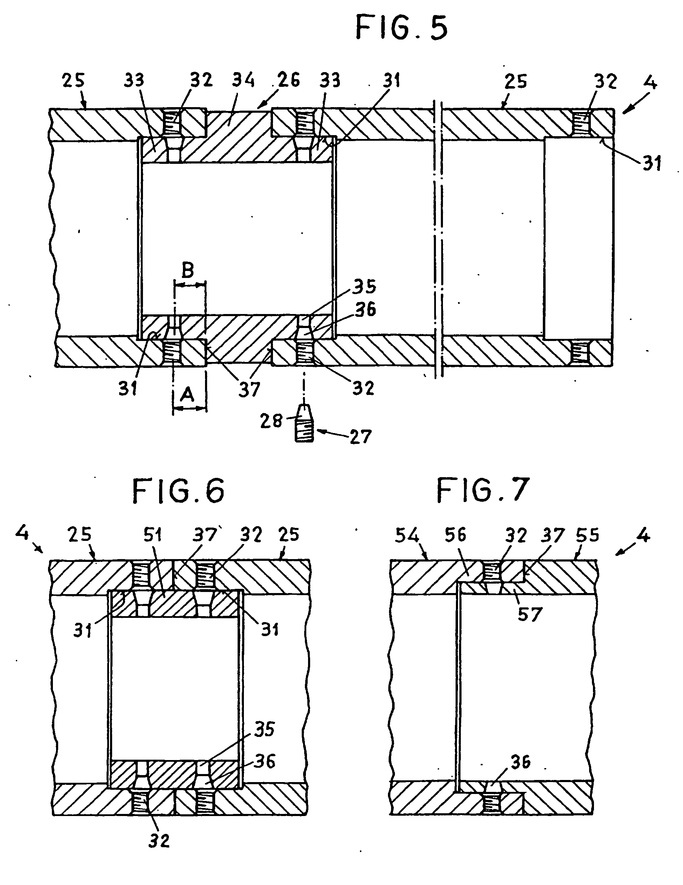

Es wird auf die Figuren 5 bis 6 Bezug genommen. Bei einer modifizierten Ausführung der Vorrichtung besteht das Tragrohr 4 aus zwei Teilrohren 25, die mittels einer Stossverbindung miteinander verbunden sind. Hierzu sind ein Verbindungsteil 26, das zum Teil innerhalb der Teilrohre 25 angeordnet ist und Stiftschrauben 27 mit einem konischen Ansatz 28 vorgesehen, welche den Verbindungsteil 26 mit den Teilrohren 25 verbinden (Fig.5).

An der Verbindungsstelle sind in den Teilrohren 25 jeweils eine Ausdrehung 31 und radial verlaufende Gewindebohrungen 32 ausgebildet. Der Verbindungsteil 26 ist hülsenförmig ausgebildet und weist zwei Ansätze 33, welche in der Ausdrehung 31 angeordnet sind, und einen Bund 34 auf, an dem die Teilrohre 25 mit den Stirnflächen anliegen. Wesentlich ist hierbei, dass die Ausdrehungen 31 tiefer als die Ansätze 33 lang sind, und dass der Innendurchmesser der Ausdrehungen 31 und der Aussendurchmesser der Ansätze 33 als Passung gefertigt sind. In den Ansätzen 33 sind radial verlaufende Durchgangsbohrungen 35 mit einer konischen Ansenkung 36 am Umfang ausgebildet.

Im zusammengefügten Zustand sind die Gewindebohrungen 32 und die Durchgangsbohrungen 35 bezüglich den Stossflächen 37, gebildet durch die Stirnflächen an den Teilrohren 25 und am Bund 34, versetzt angeordnet, derart, dass der Abstand(A) der Gewindebohrungen 32 grösser ist als der Abstand(B) der Durchgangsbohrungen 35.

Zum Verbinden der Teilrohre 25 mit dem Verbindungsteil 26 werden die Stiftschrauben 27 eingeschraubt, wobei der konische Ansatz 28 der Stiftschrauben mit der Ansenkungen 36 in Wirkeingriff kommen, so dass die Teilrohre 25 gegen den Bund 34 des Verbindungsteils 26 gepresst werden.

Wie die Figur 6 zeigt ist eine Hülse 51 als Verbindungsteil vorgesehen.

Wie die Fig.7 zeigt sind zwei Teilrohre 54,55 mit jeweils einem als Vorsprung und einem als Rücksprung ausgebildeten Abschnitt 56,57 im Endbereich und Schrauben 27 zum Verbinden der Teilrohre vorgesehen.

## Patentansprüche

1. Vorrichtung zum Bewegen von mindestens einer Einheit entlang mindestens einer Bewegungsbahn, enthaltend ein Gehäuse(1)mit einer parallel zur Bewegungsbahn verlaufende Öffnung(10), mindestens eine Führungsschiene(5) für die Einheit(6) und mindestens eine Antriebsvorrichtung(7), die mit der Einheit verbunden ist, **gekennzeichnet durch** mindestens ein flexibles Element(8) zum Abdecken der Bewegungsbahn der Einheit, welches in den Endbereichen der Bewegungsbahn am Gehäuse(1) festgelegt ist und die Einheit teilweise so umgibt, dass die Einheit(6) durch die Öffnung(10) zugänglich ist, und **durch** Führungsorgane(9) für das flexible Element(8), die drehbar an der Einheit(6) angeordnet sind.

2. Vorrichtung nach Anspruch 1, **gekennzeichnet durch** eine lineare Bewegungsbahn.

3. Vorrichtung nach Anspruch 1, **dadurch gekennzeichnet, dass** das flexible Element(8) bandförmig ist.

4. Vorrichtung nach Anspruch 1, **dadurch gekennzeichnet, dass** mindestens ein elastisches Mittel(17) zur Straffhaltung des Elementes(8) vorgesehen ist.

5. Vorrichtung nach Anspruch 1, **dadurch gekennzeichnet, dass** die Einheit(6) mindestens eine Antriebseinheit(12) aufweist.

6. Vorrichtung nach Anspruch 1, **dadurch gekennzeichnet, dass** die Einheit (6) zwei Antriebseinheiten (12) aufweist.

7. Vorrichtung nach Anspruch 1, **dadurch gekennzeichnet, dass** zwei Einheiten(6) vorgesehen sind, die unabhängig von einander entlang der Führungsschiene(5) bewegbar angeordnet sind.

8. Vorrichtung nach Anspruch 1, **dadurch gekennzeichnet, dass** ein Tragelement(4) für die Einheit(6) im Gehäuse angeordnet ist.

9. Vorrichtung nach Anspruch 8, **dadurch gekennzeichnet, dass** das Tragelement(4) aus einer Mehrzahl von Teilelementen(25) besteht, die mittels einer Stossverbindung miteinander verbunden sind.

10. Vorrichtung nach Anspruch 8, **dadurch gekennzeichnet, dass** das Tragelement(4) ein Rohr ist.

11. Vorrichtung nach Anspruch 9 oder 10, **dadurch gekennzeichnet, dass** die Verbindung zwei erste Teilrohre(25), einen Verbindungsteil(26,51), der mit den Teilrohren(25) in Eingriff ist und Schrauben(27) umfasst, und dass die ersten Teilrohre(25) eine Mehrzahl von Gewindebohrungen(32) und der Verbindungsteil(26,51) eine Mehrzahl von Durchgangsbohrungen(35) aufweisen, die bezüglich den Stossflächen(37) versetzt angeordnet sind.

12. Vorrichtung nach Anspruch 11, **dadurch gekennzeichnet, dass** das Verbindungsteil(26,51) hülsenförmig ausgebildet ist.

13. Vorrichtung nach Anspruch 9 oder 10, **dadurch gekennzeichnet, dass** die Verbindung zwei zweite Teilrohre (54, 55) mit jeweils einem als Vorsprung und einem als Rücksprung ausgebildeten Abschnitt (56, 57) im Endbereich, die miteinander in Eingriff sind und Schrauben(27) umfasst, und dass im Vorsprung(56) eine Mehrzahl von Gewindebohrungen(32) und im Rücksprung (57) eine Mehrzahl von konischen Ansenkungen (36) ausgebildet sind, die bezüglich den Stossflächen (37) versetzt angeordnet sind.

14. Vorrichtung nach Anspruch 11 oder 13, **dadurch gekennzeichnet, dass** die Durchgangsbohrungen(35) eine konischen Ansenkung(36) und die Stiftschrauben(27) einen konischen Ansatz(28) aufweisen, der mit der konischen Ansenkung (36) in Wirkeingriff ist, so dass die Teilrohre (25) unter Druck an den Stossflächen(37) anliegen.

## Claims

1. An apparatus for the movement of at least one unit along at least one path of movement including a housing (1) having an opening (10) extending parallel to the path of movement, at least one guide rail (5) for the unit (6) and at least one drive device (7) which is connected to the unit, **characterized by** at lest one flexible element (8) for the covering over of the path of movement of the unit, the element being secured to the housing (1) in the end regions of the path of movement and partly surrounding the unit such that the unit (6) is accessible to the opening (10), and by guide members (9) for the flexible element (8) which are rotatably arranged at the unit (6).

2. An apparatus in accordance with claim 1, **characterized by** a linear path of movement.

3. An apparatus in accordance with claim 1, **characterized in that** the flexible element (8) is band-like.

4. An apparatus in accordance with claim 1, **characterized in that** at least one elastic means (17) is provided for keeping the element (8) taut.

5. An apparatus in accordance with claim 1, **characterized in that** the unit (6) has at least one drive unit (12).

6. An apparatus in accordance with claim 1, **characterized in that** the unit (6) has two drive units (12).

7. An apparatus in accordance with claim 1, **characterized in that** two units (6) are provided which are movably arranged independently of one another along the guide rail (5).

8. An apparatus in accordance with claim 1, **characterized in that** a support element (4) for the unit (6) is arranged in the housing.

9. An apparatus in accordance with claim 8, **characterized in that** the support element (4) consists of a plurality of part elements (25) which are connected together by means of an abutting connection.

10. An apparatus in accordance with claim 8, **characterized in that** the support element (4) is a tube.

11. An apparatus in accordance with claim 9 or claim 10, **characterized in that** the connection includes two first part tubes (25), a connection part (26, 51) which is in engagement with the part tubes (25) and screws (27) and **in that** the first part tube (25) has a plurality of threaded bores (32) and the connection part (26, 51) has a plurality of through bores (35) which are arranged offset with respect to the abutment surfaces (37).

12. An apparatus in accordance with claim 11, **characterized in that** the connection part (26, 51) is of sleeve-like design.

13. An apparatus in accordance with claim 9 or claim 10, **characterized in that** the connection includes two second part tubes (54, 55) which are in engagement with one another each have a section (56) formed as a projection and a section (57) formed as a recess in the end region and screws (27) and **in that** a plurality of threaded bores (32) are formed in the projection (56) and a plurality of conical countersinks (36) are formed in the recess (57) and are arranged offset with respect to the abutting surfaces (37).

14. An apparatus in accordance with claim 11 or 13, **characterized in that** the through bores (35) have a conical countersink (36) and the locking screws (27) have a conical formation (28) which is in work-ing engagement with conical the countersink (36) so that the part tubes (25) are in contact at the abutting surfaces (37) under pressure.

## Revendications

1. Dispositif pour déplacer au moins une entité sur au moins une trajectoire, comprenant un carter (1) doté d'une ouverture (10) s'étendant parallèlement à la trajectoire, au moins un rail de guidage (5) pour l'entité (6) et au moins un dispositif d'entraînement (7) relié à l'entité, **caractérisé par** au moins un élément flexible (8) pour recouvrir la trajectoire de l'entité, qui est fixé au carter (1) dans les zones d'extrémité de la trajectoire et qui entoure partiellement l'entité de telle sorte que ladite entité (6) soit accessible à travers l'ouverture (10), et par des organes de guidage (9) pour l'élément flexible (8) qui sont disposés de façon rotative sur l'entité (6).

2. Dispositif selon la revendication 1, **caractérisé par** une trajectoire linéaire.

3. Dispositif selon la revendication 1, **caractérisé en ce que** l'élément flexible (8) se présente sous forme de bande.

4. Dispositif selon la revendication 1, **caractérisé en ce qu'**au moins un moyen élastique (17) est prévu pour maintenir l'élément (8) tendu.

5. Dispositif selon la revendication 1, **caractérisé en ce que** l'entité (6) présente au moins une unité d'entraînement (12).

6. Dispositif selon la revendication 1, **caractérisé en ce que** l'entité (6) présente deux unités d'entraînement (12).

7. Dispositif selon la revendication 1, **caractérisé en ce que** deux entités (6) sont prévues, qui sont disposées de façon à pouvoir être déplacées le long du rail de guidage (5) indépendamment l'une de l'autre.

8. Dispositif selon la revendication 1, **caractérisé en ce qu'**un élément porteur (4) destiné à l'entité (6) est disposé dans le carter (1).

9. Dispositif selon la revendication 8, **caractérisé en ce que** l'élément porteur (4) est composé de plusieurs parties d'élément (25) qui sont reliées entre elles par un éclissage.

10. Dispositif selon la revendication 8, **caractérisé en ce que** l'élément porteur (4) est un tube.

11. Dispositif selon la revendication 9 ou 10, **caractérisé en ce que** l'assemblage comprend deux premières parties de tube (25), une pièce de jonction (26, 51), qui est en prise avec les parties de tube (25), et des vis (27), et **en ce que** les premières parties de tube (25) présentent plusieurs taraudages (32) et la pièce de jonction (26, 51) plusieurs perçages de passage (35), qui sont décalés par rapport aux surfaces aboutées (37).

12. Dispositif selon la revendication 11, **caractérisé en ce que** la pièce de jonction (26, 51) est réalisée en forme de douille.

13. Dispositif selon la revendication 9 ou 10, **caractérisé en ce que** l'assemblage comprend deux deuxièmes parties de tube (54, 55) qui comportent chacune dans les zones d'extrémité des segments (56, 57) réalisés respectivement en tant que saillie et retrait, qui sont mutuellement en prise, et des vis (27), et **en ce que** dans la saillie (56) sont réalisés plusieurs taraudages (32) et dans le retrait (57), plusieurs noyures conique (36), qui sont décalées par rapport aux surfaces aboutées (37).

14. Dispositif selon la revendication 11 ou 13, **caractérisé en ce que** les perçages de passage (35) présentent une noyure conique (36) et les boulons filetés (27), un téton conique (28) qui est en prise active avec la noyure (36), si bien que les parties de tube (25) sont pressées l'une contre l'autre au niveau des surfaces aboutées (37).
